# EUROPEAN PATENT APPLICATION

(11) **EP 4 020 665 A1**
(43) Date of publication of application: **29.06.2022**
(21) Application number: 21207574.1
(22) Date of filing: 10.11.2021
(51) Int. Cl.: H01M 10/613, B60K 11/06, H01M 10/625, H01M 10/6563, H01M 10/6565, H01M 50/249

(54) **COOLING STRUCTURE FOR BATTERY PACK**

(30) Priority: 28.12.2020 JP 2020218222
(71) Applicant: Suzuki Motor Corporation, Shizuoka-ken 432-8611 (JP)
(72) Inventor: Mizutori, Masaki, Hamamatsu-shi, 432-8611 (JP); Watanabe, Koichiro, Hamamatsu-shi, 432-8611 (JP)
(74) Representative: Henkel & Partner mbB

(57) **Abstract**

[Problem to be Solved] To improve blowing circulation efficiency inside a sealed type battery pack, to thereby achieve a simplification of the structure, uniformity of the temperature distribution inside the battery pack, and a desired cooling effect.

[Solution] An inside of the battery case (10, 20) is partitioned from a battery module (31) side by a support plate (17) except for a peripheral portion thereof; a blower fan (5) fixedly arranged on the support plate, and a blower duct (4) for blowing air sent out from the blower fan to the middle of the battery modules (31) in a vehicle longitudinal direction and a vehicle width direction are provided; the blower duct comprises a proximal portion (40) connected to a discharge port of the blower fan and a duct portion (41) extending from the proximal portion to a lower side, through the support plate; and a lower end portion (41b) of the duct portion is inserted into the gap (310) in the battery modules and held in a lower portion of a side face of the battery module.

## Description

### [Technical Field]

The present invention relates to a cooling structure for a battery pack to be mounted in a vehicle.

### [Background Art]

A battery pack to be mounted in a vehicle, for example a battery pack for an electric vehicle, is configured by arranging a plurality of modules constituted of a plurality of secondary batteries inside a flat case, and is arranged in a floor portion of a vehicle body or under a floor, for the purpose of providing a larger capacity while securing a vehicle interior space and a luggage compartment space. Since the secondary battery generates heat during charging and discharging, the battery pack is provided with a cooling structure.

For a cooling structure for a battery pack, an open type that introduces outside air, a sealed type that employs a heat pump, and the like are known; however, the former has a problem regarding penetration of rainwater and dust, while the latter requires a compressor and a heat dissipator provided outside the battery pack (see Patent Literature 1), thus preventing the battery pack from constituting a cooling system by itself, leading to complication of the system and to a problem of condensed water generated in an evaporator provided inside.

### [Citation List]

### [Patent Literature]

[Patent Literature 1] JP 2011-011632 A

### [Summary of Invention]

### [Problems to be Solved by the Invention]

In view of this, a method of providing a blower fan inside the sealed type battery pack to make the temperature distribution uniform inside the battery pack and to improve efficiency of heat dissipation from a battery case as a heat dissipation member to the outside is being reviewed.

The present invention has been made in view of the aforementioned circumstances, and an objective of the present invention is to improve air-blowing circulation efficiency inside the battery back, and to achieve simplification of the structure, homogenization of the temperature distribution inside the battery pack, and a desired cooling effect.

### [Means for Solving the Problems]

In order to solve the aforementioned problem, the present invention provides

A cooling structure for a battery pack comprising a plurality of battery modules inside a substantially sealed battery case, wherein:
the plurality of battery modules are fixedly arranged inside the battery case with a gap between one another;
in an inside of the battery case, a support plate provided to extend on an upper side of the battery module separates a central portion except for a peripheral portion thereof from a side of the battery module;
a blower fan fixedly arranged on the support plate, and a blower duct for blowing air sent out from the blower fan to the middle of the battery modules in a vehicle longitudinal direction and a vehicle width direction are provided, the blower duct comprises a proximal portion connected to a discharge port of the blower fan and a duct portion extending from the proximal portion to a lower side, through the support plate, and, a lower end portion of the duct portion is inserted into the gap in the battery modules and held in a lower portion of a side face of the battery module; and
the cooling structure for a battery pack is configured such that the air blown to the gap in the battery modules through the duct portion passes through the peripheral portion of the support plate to be circulated to an inside of the elevated portion.

### [Advantageous Effects of Invention]

As described above, in the cooling structure for a battery pack according to the present invention, the battery module is cooled by air blown to the middle of the battery module through the duct portion extending to a lower side, through the support plate, and the air raised in temperature through heat exchange with the battery module is circulated to the blower fan in the elevated portion through the peripheral portion of the support plate, during which heat is dissipated to the outside through heat exchange with a side face of the battery case or the upper face of the elevated portion.

The configuration in which the lower end portion of the blower duct is inserted into the gap in the battery modules and held in the lower portion of the side face of the battery module enables fixation of the lower end portion of the duct with the battery modules themselves (only with the components structurally required for the battery pack), without employing a component dedicated to fixation such as a bolt and a clip, and is advantageous in reducing the number of components and the number of installation steps.

In addition, with the configuration in which the blower duct is held in the gap in the battery modules, an effect can be expected for the blower duct functioning as a buffer material that reduce damage to the battery modules when a shock is given to the battery pack from outside.

### [Brief Description of Drawings]

[Figure 1] Figure 1 is a perspective view showing appearance of a battery pack.
[Figure 2] Figure 2 is a perspective view showing an inside of the battery pack.
[Figure 3] Figure 3 is a plan view showing the inside of the battery pack.
[Figure 4] Figure 4 is an A-A cross-sectional view of Figure 1.
[Figure 5] Figure 5 is a B-B cross-sectional view of Figure 1.
[Figure 6] Figure 6 is an enlarged cross-sectional view of a major part of Figure 4.
[Figure 7] Figure 7 is an enlarged perspective view of a major part of Figure 6 showing a connection portion of a first branch duct portion.
[Figure 8] Figure 8 is an enlarged perspective view of a major part showing an exploded view of the connection portion of the first branch duct portion.
[Figure 9] Figure 9 is a C-C cross-sectional view of Figure 6.

### [Mode for Carrying Out the Invention]

Hereinafter, an embodiment of the present invention is described in detail with reference to the drawings.

### (Summary of battery pack)

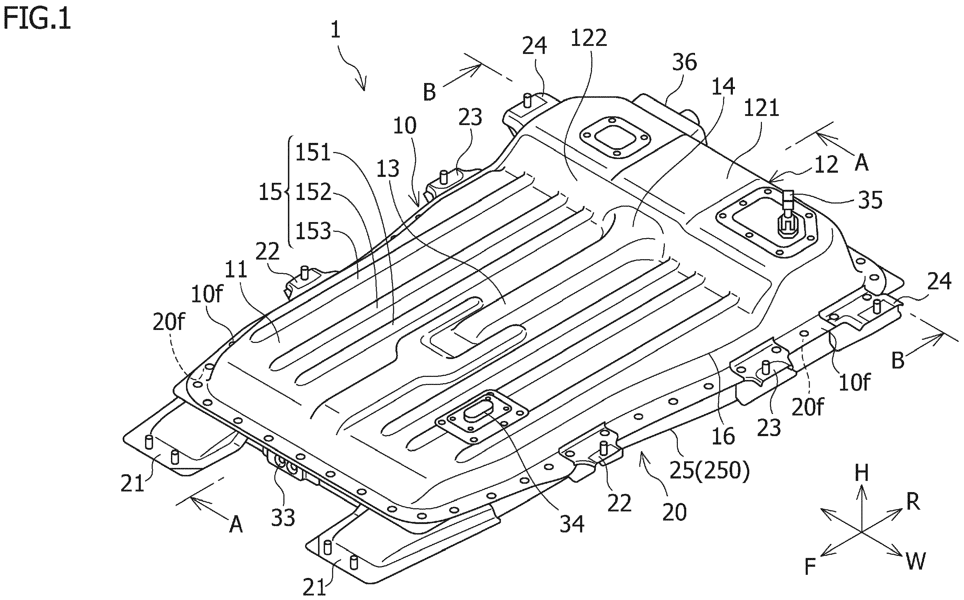

A battery pack 1 according to an embodiment of the present invention has a flat shape overall, except for an elevated portion 12 in a rear portion as shown in Figure 1, based on the assumption of being mounted under the floor of a vehicle. Note that, in the following description, "front" and "rear" mean a front side and a rear side in a vehicle longitudinal direction FR respectively, "left" and "right" mean a left side and a right side in a vehicle width direction W when oriented to a front side F in the vehicle longitudinal direction respectively, and "up" and "down" correspond to an upper side and a lower side in a vehicle height direction H, respectively, unless otherwise stated.

As shown in Figure 1 to Figure 5, the battery pack 1 is provided with a plurality of battery modules 31, 32 inside a battery case composed of an upper case 10 and a lower case 20. Each of the battery modules 31, 32 is obtained through modularization by retaining a plurality of secondary battery cells (e.g., lithium-ion secondary battery) connected to one another in series, in a laminated state in a box-shaped or frame-shaped inner case.

The upper case 10 and the lower case 20 are each formed of a press-molded product of a metal having favorable thermal conductive characteristics such as steel, stainless steel or aluminum alloy, in a shell-like shape or a tray-like shape, and function as members for heat dissipation to the outside in their own right.

In the upper case 10 constituting an upper part of the battery pack 1, on an upper face 11 from a front portion to a rear portion in the vehicle longitudinal direction thereof, a ridge portion 13 extending in the vehicle longitudinal direction FR is formed at the center in the vehicle width direction W, and on each of left and right sides thereof, three subridge portions 15 (bead portions 151, 152, 153) extending in parallel with the vehicle longitudinal direction FR are formed, as shown in Figure 1. In addition, a joining portion 14 with the ridge portion 13 in an inclined face 122 on a front side of the elevated portion 12 is formed in a funnel shape rising and expanding toward the elevated portion 12.

The ridge portion 13 and the subridge portions 15 described above are a reinforcing structure (reinforcing bead portion) for increasing a surface rigidity of the upper face 11 of the upper case 10 and, at the same time, constitutive elements of the cooling structure forming a channel for circulating air (returning channel) inside the upper case 10, as described later.

Note that it is preferable that the ridge portion 13 is formed such that a protrusion height of a rear side portion is greater than that of a front side portion in the vehicle longitudinal direction FR, or is formed such that the protrusion height of the ridge portion 13 increases toward the elevated portion 12.

The upper face 11 of the upper case 10 is formed to be substantially flat as a whole, although it has the ridge portion 13 and the subridge portions 15 described above, whereas the elevated portion 12 elevated above is formed on the rear portion of the upper case 10 so as to be accommodated in a lower space of a kick-up portion under a rear seat of the vehicle. An inner space expanded to an upper side by the elevated portion 12 is an installation space for a blower duct 4 and a blower fan 5 constituting the cooling system, and at the same time, also a heat dissipation space spaced apart from the battery modules 31, 32, as described later.

The battery pack 1 is configured such that a water proofing property and a hermetic property are ensured, by integrating a flange portion 20f around the lower case 20 and a flange portion 10f of the upper case 10 through joining with a bolt or the like via a sealing material 20c, in a state in which: the battery modules 31, 32 and control devices thereof are accommodated in the lower case 20; constitutive members such as the blower duct 4 and the blower fan 5 constituting the cooling system are installed; and necessary wiring is done.

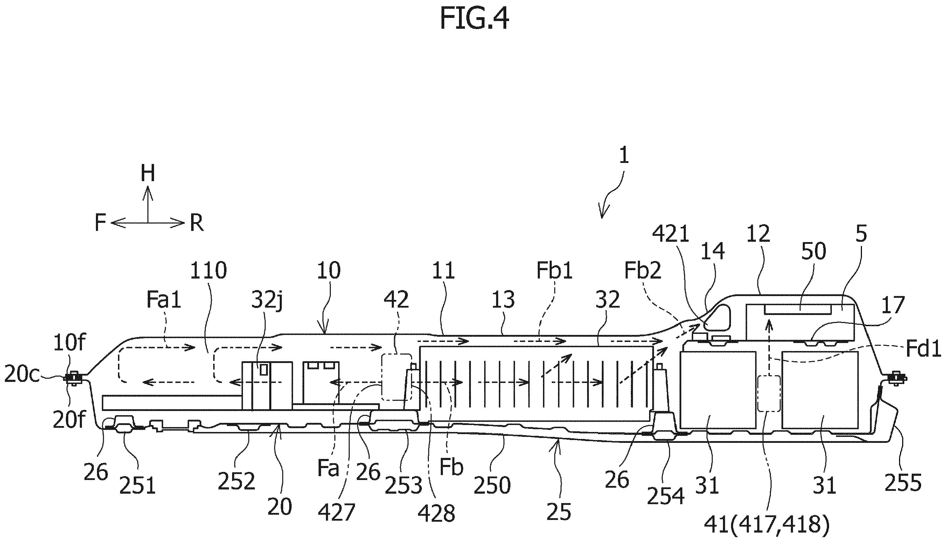

A support frame 25 functioning as a supporting frame for the battery pack 1 is fixed onto a lower face of the lower case 20. The support frame 25 is configured in a ladder-like shape with a pair of left and right side frames 250 and a plurality of cross frames 251, 252, 253, 254, 255 extending in the vehicle width direction W therebetween and being rigidly joined, as shown in Figure 4.

The battery pack 1 is provided with four attachment brackets 21, 22, 23, 24 on each of left and right sides, as attachment portions with respect to the vehicle body. Among these, the attachment brackets 22, 23, 24, except for the frontmost portion, are constituted of an upper bracket joined to the flange portion 10f of the upper case 10 of the battery pack 1 and a lower bracket joined to the flange portion 20f of the lower case 20. The battery pack 1 is fixed to the vehicle body through tightening of a bolt, which is inserted from below into a bolt hole of each of the attachment brackets 21, 22, 23, 24, to a weld nut in an attachment portion on the vehicle body side.

Note that, in the battery pack 1, a high voltage connector 33 for input and output of electric power with respect to a driving motor of the vehicle is provided on a front end face of the lower case 20, and a high voltage connector 36 for charging is provided on a rear face of the upper case 10 (elevated portion 12). In addition, a service plug 34 for interrupting electric power of the battery modules 31, 32 upon inspection or in case of emergency, is provided on the upper face 11 of the upper case 10, and a control connector 35 is provided on an upper face 121 of the elevated portion 12 of the upper case 10.

### (Arrangement of battery module)

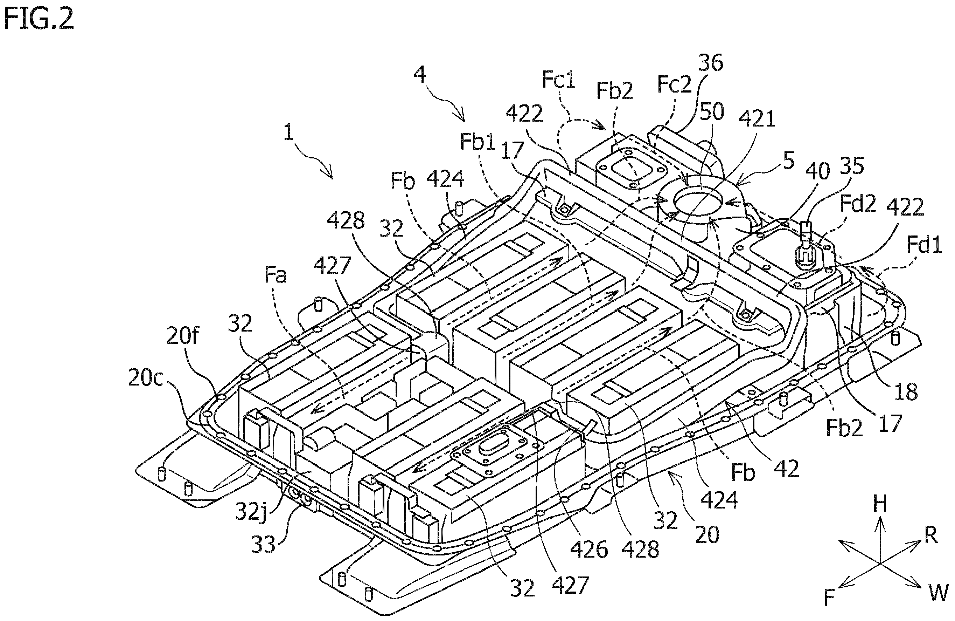

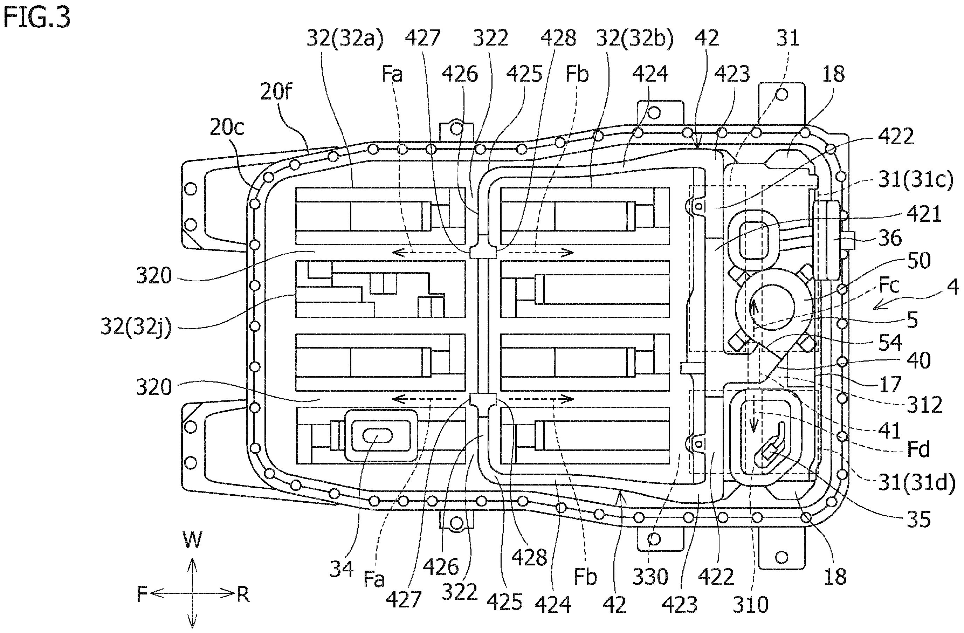

Inside the battery pack 1, four battery modules 32 (32a, 32j) are arranged in lateral alignment in the frontmost portion with gaps 320, 322 between one another, while respective longitudinal directions thereof correspond to the vehicle longitudinal direction FR, and on a rear side thereof, which is an intermediate portion of the battery pack 1, four battery modules 32 (32b) are arranged in lateral alignment in a similar arrangement while respective longitudinal directions thereof correspond to the vehicle longitudinal direction FR, as shown in Figure 2 and Figure 3.

In the illustrated example, the module 32j, which is second from the right in the frontmost portion, is configured as a junction box provided with a relay circuit that supplies and interrupts electric power to the high voltage connector 33 and the like; however, the module 32j may be configured as a battery module by, for example, consolidating this function into a junction box 38 in the elevated portion 12, and is explained as the battery module 32 for convenience.

In a rear portion of an inside of the battery pack 1, as shown by a dashed line in Figure 3, four battery modules 31 (31c, 31d) are provided in parallel with gaps 310, 312 between one another while respective longitudinal directions thereof correspond to the vehicle width direction W, with a gap 330 with respect to the battery module 32b in the intermediate portion. Among these, two battery modules 31d on the left side have a smaller number of sets of secondary battery cells than other battery modules, and are configured as half-sized modules having shorter module lengths in the longitudinal direction.

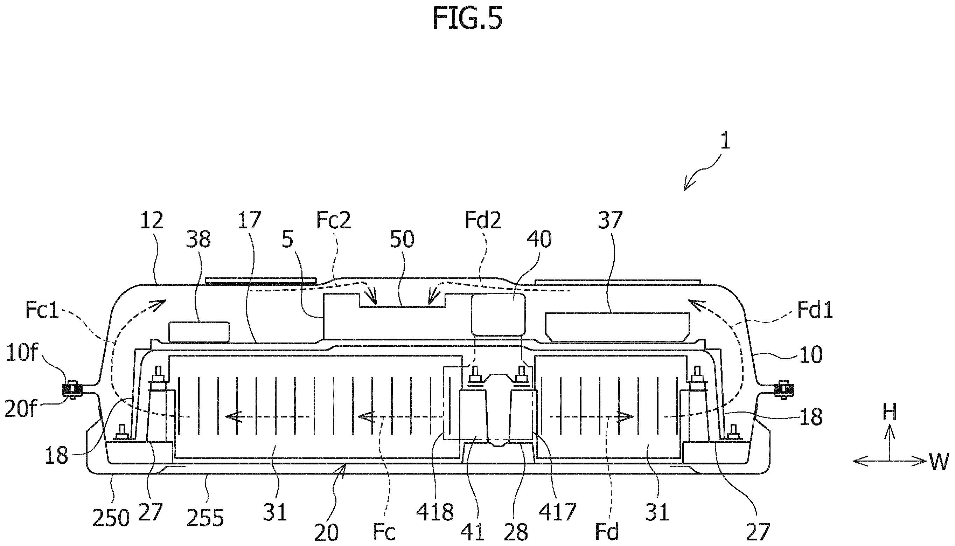

Each of the battery modules 31, 32 is fixed to reinforcing frames 26, 27, 28 provided on an inner bottom portion of the lower case 20, as shown in Figure 4 and Figure 5.

In other words, the battery module 32 in the frontmost portion and the intermediate portion is fixed, at both front and rear end portions thereof in the longitudinal direction, with a bolt onto the reinforcing frame 26 extending in the vehicle width direction W provided at three positions to be spaced apart frontward and rearward from the frontmost portion to the intermediate portion of the inner bottom portion of the lower case 20 as shown in Figure 4, and the four battery modules 31 in the rear portion are fixed, at both left and right end portions thereof in the longitudinal direction, with a bolt onto the reinforcing frames 27, 28 extending in the vehicle longitudinal direction FR provided to be spaced apart in both side portions and the intermediate portion in the rear portion of the inner bottom portion of the lower case 20 as shown in Figure 5.

Note that, in the following description, the four battery modules 31 (31c, 31d) in the rear portion of the battery pack 1 may be collectively referred to as a first battery module group 31, and the eight battery modules 32 (32a, 32b) in the frontmost portion and the intermediate portion of the battery pack 1 described above may be collectively referred to as a second battery module group 32.

### (Cooling system for battery module)

As shown in Figure 2 to Figure 5, a support plate 17 for installing the blower duct 4 and the blower fan 5 constituting the cooling system is provided on an upper side of the four battery modules 31 arranged in the rear portion of the battery pack 1.

The support plate 17 is fixed onto the reinforcing frame 27 via a leg portion 18, on both sides thereof in the vehicle width direction. The leg portion 18 is formed of an inverted-U shaped member obtained by bending downward both ends of a frame material extending in the vehicle width direction W along the lower face of the support plate 17, and is fixed to the reinforcing frame 27 in respective lower end portions (flange portions) with a bolt.

The support plate 17 is provided to extend at substantially the same height as the upper face 11 of the upper case 10 with an interval from the upper face of the battery module 31, to partially partition the inner space of the elevated portion 12 of the upper case 10 except for a peripheral portion thereof, with respect to the battery module 31 side in the lower portion, and has intervals from a side face and a rear face of the elevated portion 12.

The blower fan 5 is installed in a substantially central portion in the vehicle width direction W of the support plate 17. In addition, a control device 37 for carrying out charging-and-discharging management, cell balance control and the like of the battery is installed on the right side of the blower fan 5, the junction box 38 for the high voltage connector 36 is installed on the left side of the blower fan 5, and, along a front edge portion of the support plate 17 on a front side thereof, the blower duct 4 (second branch duct portion 42) is installed.

A centrifugal fan (sirocco fan or turbofan) can be suitably used as the blower fan 5, which is fixed with a bolt onto the support plate 17 such that a rotational axis direction corresponds to the vehicle height direction H and an inlet 50 is positioned in an upper portion of a fan case. In the illustrated example, by employing a sirocco fan in which a motor is arranged inside a fan hub, a motor housing is prevented from protruding to a lower side and a sufficient air channel is secured on an upper side of the inlet 50.

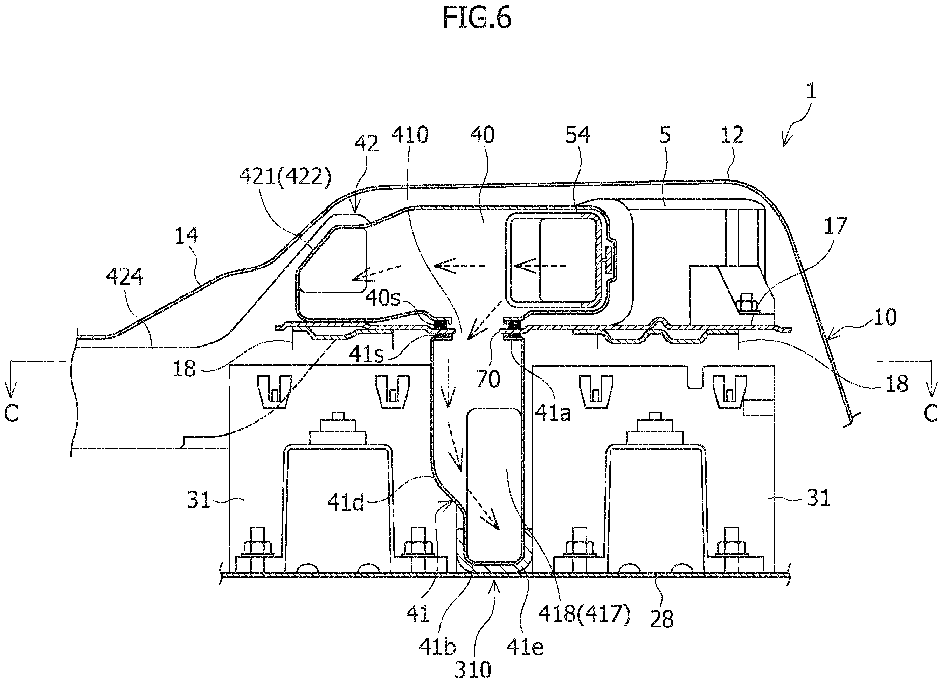

The blower duct 4 includes: a proximal portion 40 extending frontward from a discharge port 54 of the blower fan 5; a first branch duct portion 41 extending to the lower side from a communication portion 410 on a bottom portion of a substantially intermediate portion of the proximal portion 40 through an opening 70 on the support plate 17 as shown in Figure 5 and Figure 6; and the second branch duct portion 42 connected to a front end portion of the proximal portion 40 as shown in Figure 2 and Figure 3.

### (Blower duct; First branch duct portion)

The first branch duct portion 41 is communicatively connected from the intermediate portions (310, 312) in the vehicle longitudinal direction FR and the vehicle width direction W of the four battery modules 31c, 31d of the first battery module group 31, to a pair of first outlets 417, 418 opened in both left and right direction toward the respective gaps 310, 310 of the battery modules 31c, 31d, as shown in Figure 3 and Figure 5.

The first branch duct portion 41 is constituted of a member different from the proximal portion 40, and is not directly connected to the proximal portion 40, as shown in Figure 6. In other words, the first branch duct portion 41 is provided with a thick-walled portion 41e in a lower end portion 41b thereof, and in a state in which the lower end portion 41b (thick-walled portion 41e) is fitted into the gap 310 of the battery modules 31, 31, an upper end portion 41a oriented toward the communication portion 410 comes into contact with a lower face of a periphery of the opening 70 (seating face 70a) on the support plate 17 through an elastic sealing member 41s, to be held between the support plate 17 and the reinforcing frame 28.

The thick-walled portion 41e may be either constituted of a protrusion portion such as a rib provided to protrude from the lower end portion 41b of the first branch duct portion 41, or configured as an expanded portion obtained by expanding the lower end portion 41b to correspond to an external shape of the thick-walled portion 41e shown in the drawings. Alternatively, the thick-walled portion 41e may also be a spacer constituted of a member different from the lower end portion 41b, in which case the spacer (41e) is preferably fixed to the lower end portion 41b by fitting, adhesion, or the like in advance. Further alternatively, the spacer (41e) may be configured with an elastic member such as rubber and elastomer, such that the lower end portion 41b is held in the gap 310 in the battery modules 31, 31 through making use of elastic deformation of the spacer.

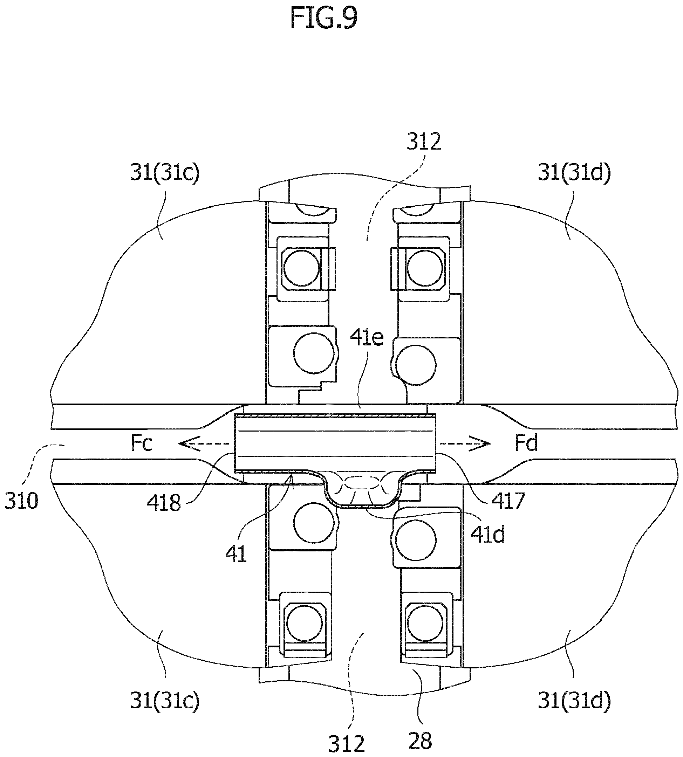

As shown in Figure 9, the lower end portion 41b of the first branch duct portion 41: extends across a gap 312 in an intersecting direction with the gap 310 in the longitudinal direction in the battery modules 31, 31 to both sides thereof; has outlets 417, 418 on the respective sides; and is inserted, on the respective sides, into the gap 310 in the battery modules 31, 31. In other words, the lower end portion 41b is, on the outlet 418 side, held in a lower portion of the side face of the battery modules 31c, 31c oriented toward the gap 310, and, on the outlet 417 side, held in a lower portion of the side face of the battery modules 31d, 31d oriented toward the gap 310.

Such attachment of the first branch duct portion 41 is done by, after completion of attachment and wiring of the four battery modules 31c, 31d on the lower side of the support plate 17: inserting the first branch duct portion 41 from an upper side into the gap of the battery modules 31c, 31d; holding the lower end portion 41b (thick-walled portion 41e) by the side faces of the battery modules 31, 31 and the upper face of the reinforcing frame 28 for temporary fixation; and, in such a temporarily fixed state, attaching the support plate 17 on an upper side thereof, whereby the first branch duct portion 41 is bound from both upper and lower sides by the support plate 17 (seating face 70a) and the reinforcing frame 28 via the elastic sealing member 41s.

Thereafter, the proximal portion 40 of the blower duct 4 is fixed, together with the blower fan 5, onto the upper face of the support plate 17, and a lower face of a periphery (connection face 40a) of the communication portion 410 comes into contact with a seating face 70a of the periphery of the opening 70 on the support plate 17 via the elastic seal member 40s, whereby an air-blow channel of the first branch duct portion 41 is formed from the proximal portion 40 to the first outlets 417, 418 via the communication portion 410.

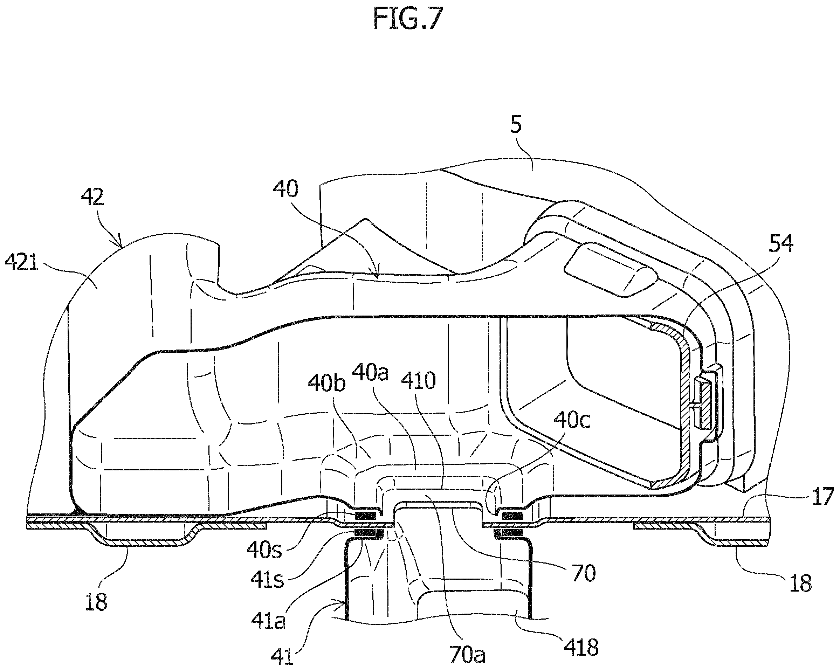

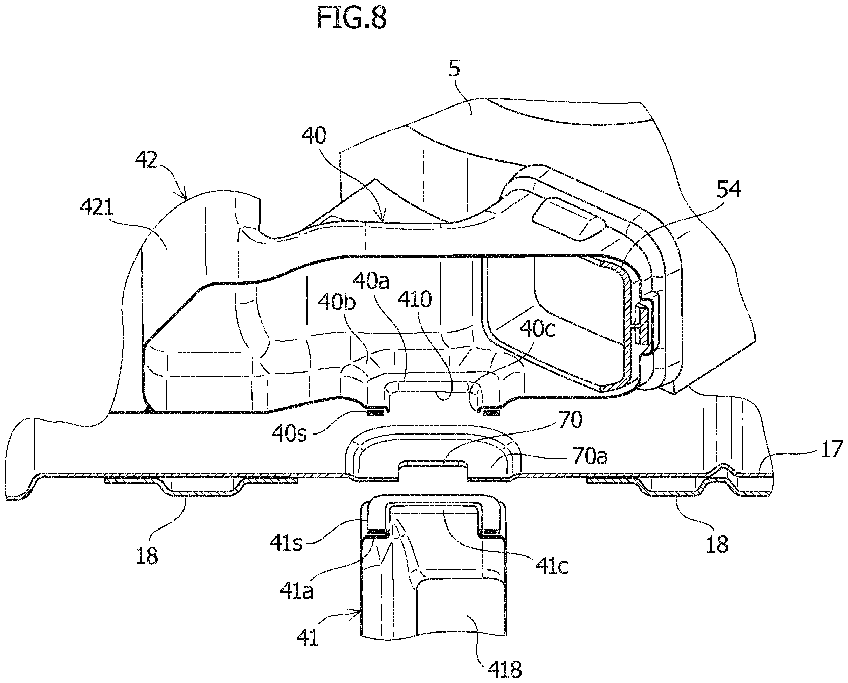

Figure 7 and Figure 8 show details of the connection portion (40a, 70a, 41a) between the proximal portion 40 and the first branch duct portion 41 via the opening 70 on the support plate 17. As shown in the drawings, due to a peripheral edge 40c protruding to the lower side from an inner peripheral side of the connection face 40a to cover an end face on an inner peripheral side of the elastic seal member 40s and being provided in a periphery of the communication portion 410 of the proximal portion 40 communicatively connected to the first branch duct portion 41, the ring-shaped elastic seal member 40s is reliably positioned on a lower face of the connection face 40a and exposure of the elastic seal member 40s to the air channel side is minimized. In addition, an introduction portion 40b in a funnel shape toward the connection face 40a (and the opening 70 on the support plate 17) is formed in a periphery of the connection face 40a of the proximal portion 40, so that resistance of the air passing through the communication portion 410 is reduced, in combination with the aforementioned configuration of the peripheral edge 40c.

On the other hand, due to the seating face 70a in the periphery of the opening 70 on the support plate 17 being formed as an inferior face positioned on a lower side with respect to a base face of the support plate 17 via a stepped portion, the connection face 40a (elastic seal member 40s) of the proximal portion 40 is easily positioned, and there is also an advantage of securing a space in an up-down direction forming the introduction portion 40b in a funnel shape and the peripheral edge 40c (elastic seal member 40s) on an inner bottom portion of the proximal portion 40 by protrusion of the seating face 70a to the lower side.

Furthermore, due to an upper end portion 41a of the first branch duct portion 41 being formed as a shoulder portion extending to an inner side with respect to a side face of the first branch duct portion 41, and a peripheral edge 41c protruding to the upper side from an inner peripheral side thereof being provided, a ring-shaped elastic seal member 41s is reliably positioned in a periphery of the upper end portion 41a and the elastic seal member 41s is prevented from being exposed to the air channel side.

Rubber, elastomer, an elastic foam material and the like having elasticity (shock-absorbing property) and a sealing property can be used as the elastic seal members 40s, 41s, and, in a state in which the peripheral edge 40a of the communication portion 410 and the peripheral edge 41a of the upper end portion 41a are pressurized and given initial deformation within such a degree that there is no direct contact with the seating face 70a of the support plate 17, the communication portion 410 of the proximal portion 40 and the upper end portion 41a of the first branch duct portion 41 are connected via the elastic seal members 40s, 41s and the seating face 70a of the support plate 17.

Due to this configuration, a hermetic property of the air channel can be ensured without using a mechanical fitting structure, and it is configured such that the proximal portion 40 of the blower duct 4 in proximity to the blower fan 5 is vibration-insulated from the support plate 17 and the first duct portion 41, and generation of vibration and noise can be prevented in connection portions thereof.

In addition, the first branch duct portion 41 has a basic shape extending substantially immediately beneath from the bottom portion of the proximal portion 40 extending frontward from the discharge port 54 of the blower fan 5 as shown in Figure 6; however, on a side face positioned on a front side in a flow direction of the air discharged from the blower fan 5, a semi-funnel shape portion 41d bulging into the gap 312 in the vehicle longitudinal direction of the battery modules 31, 31 and extending to a lower side is formed. Due to the semi-funnel shape portion 41d, it is configured such that the air discharged from the blower fan 5 is guided with a small pressure loss to the outlets 417, 418 positioned slightly on a rear side in the vehicle longitudinal direction with respect to the communication portion 410 (opening 70).

Furthermore, in the lower end portion 41b, among the outlets 417, 418 positioned on both sides with respect to the semi-funnel shape portion 41d immediately beneath the proximal portion 40, a channel length of the duct leading to the outlet 418 on a side of the battery modules 31c, 31c that are relatively long, is longer, compared to that leading to the outlet 417 on a side of the half-sized battery modules 31d, 31d having a short length in the longitudinal direction, as shown in Figure 9. This configuration enables formation of the air flow Fc of high rectilinearity all along the length of battery modules 31c, 31c that are relatively long.

Moreover, in the illustrated example, the first branch duct portion 41 comes into contact only with the lower portion of the side face adjacent to the end portion of the battery modules 31, 31 in the thick-walled portion 41e of the lower end portion 41b, and as shown in Figure 6, a gap is secured between a side face of the outlets 417, 418 except for the thick-walled portion 41e, and a side face of the battery modules 31, 31. This configuration separates the battery modules 31, 31 from the first branch duct portion 41, and the air flows Fc, Fd blown from the outlets 417, 418 generate drawn air flows in the same direction in the respective gaps.

Note that, although the battery modules 31, 31 are isolated from the first branch duct portion 41 in the illustrated example, it is also possible to, in Figure 9, bring the semi-funnel shape portion 41d into at least partial contact with an end face (corner portion) facing the gap 312 in the battery modules 31, 31, to position the lower end portion 41b in the extension direction of the gap 310 or to limit movement thereof in the extension direction. As described above, in the lower end portion 41b, due to the thick-walled portion 41e being held through contact with the side face of the battery modules 31, 31, the thick-walled portion 41e is formed of the same material as (integrally with) the lower end portion 41b, providing an advantage in a case in which locking through elastic deformation or friction force cannot be expected.

### (Blower duct; Second branch duct portion)

The second branch duct portion 42 includes, as shown in Figure 2 and Figure 3: an upper stream portion (first section) 421 extending from the front end portion of the proximal portion 40 to both sides in the vehicle width direction W along the front edge portion of the support plate 17; an upper stream portion (second section) 422 leading to a first bent portion 423 adjacent to the side portion of the battery case 1; a lower stream portion (first section) 424 extending from the first bent portion 423 to a lower front side in the vehicle longitudinal direction; and a lower stream portion (second section) 426 being bent at a second bent portion 425 on a front side thereof and extending to a central side in the vehicle width direction W.

The lower stream portion (second section) 426 is communicatively connected from the intermediate portions (320, 322) in the vehicle longitudinal direction FR and the vehicle width direction W of the four battery modules 32a, 32b on the left and right sides of the second battery module group 32, to a pair of second outlets 427, 428 opened respectively on a front side and a rear side toward the respective gaps 320 of the battery modules 32a, 32b.

The upper stream portions 421, 422 of the second branch duct portion 42 are fixed onto the support plate 17 in a plurality of attachment portions in respective lower front portions of the second sections 422 on the left and right sides and the like, by means of a fastening member or the like. The lower stream portions 424, 426 of the second branch duct portion 42 are fixed onto the inner bottom portion of the lower case 20 in a plurality of attachment portions in a side portion of the first section 424 and the like, by means of a fastening member or the like.

### (Air circulation inside battery pack and cooling action)

In the cooling system configured as described in the foregoing, air in the elevated portion 12 is drawn from the inlet 50 through activation of the blower fan 5 to generate:
(i) first cooling air Fc, Fd (Figure 3, Figure 5, Figure 6) being pressure-fed from the proximal portion 40 of the blower duct 4 through the first branch duct portion 41 extending to the lower side, and blown from the first outlets 417, 418 to each of left and right sides; and
(ii) second cooling air Fa, Fb (Figure 2 to Figure 4) being pressure-fed from the proximal portion 40 of the blower duct 4 through the upper stream portions 421, 422 and the lower stream portions 424, 426 of the second branch duct portion 42, and blown from the second outlets 427, 428 on each of left and right sides to each of front and rear sides.

As shown in Figure 3 and Figure 5, the first cooling air Fc, Fd flow from the intermediate portion of the four battery modules 31c, 31d of the first battery module group 31, to each of left and right sides along the respective gaps 310, 310 in the vehicle width direction W of the battery modules 31c, 31d, during which each of the battery modules 31c, 31d is cooled through heat exchange with each of the battery modules 31c, 31d.

The air heated by the heat exchange with each of the battery modules 31c, 31d: rises from a gap portion on both left and right sides in the battery pack 1 as shown by arrows Fc1, Fd1 in Figure 5; is collected in the elevated portion 12, which is slightly negative in pressure due to the drawing of the blower fan 5, on the upper side of the support plate 17; dissipates heat through heat exchange with the lower case 20 and the upper case 10 during a process of flowing from side wall portions of the lower case 20 and the elevated portion 12 along a ceiling portion of the elevated portion 12; and is drawn by the inlet 50 of the blower fan 5 as shown by arrows Fc2, Fd2.

As shown in Figure 2 to Figure 4, the second cooling air Fa, Fb flow from the intermediate portion of the four battery modules 32a, 32b on the left and right sides of the second battery module group 32, to each of front and rear sides along the respective gaps 320, 320 in the vehicle longitudinal direction FR of the battery modules 32a, 32b, during which each of the battery modules 32a, 32b is cooled through heat exchange with each of the battery modules 32a, 32b.

The air heated by the heat exchange with each battery module 32a in the frontmost portion rises in a front portion in the battery pack 1 as shown by an arrow Fa1 in Figure 4; dissipates heat through heat exchange with the upper case 10 along ceiling portions (11, 13) of the upper case 10, and flows to a rear side toward the elevated portion 12, which is slightly negative in pressure due to the drawing of the blower fan 5. On the other hand, the air heated by the heat exchange with each battery module 32b in the intermediate portion also flows to the rear side as shown by arrows Fb1, Fb2 while dissipating heat through heat exchange with the upper case 10, is collected in the elevated portion 12, and is drawn by the inlet 50 of the blower fan 5.

As described in the foregoing, an inside (negative pressure zone) of the elevated portion 12 of the battery pack 1 is separated by the support plate 17 from a lower side except for a peripheral portion, and is slightly negative in pressure due to the blower fan 5 (inlet 50) being installed, to generate air flows Fb2, Fc2, Fd2 directed to the drawing opening 50 along the ceiling portion.

On the other hand, the rear portion (first positive pressure zone) of the battery pack 1 in which the first battery module group 31 is installed and the cooling air Fc, Fd are blown from the first outlets 417, 418 of the blower duct 4 to each of left and right sides, and the front portion and the intermediate portion (second positive pressure zone) of the battery pack 1 in which the second battery module group 32 is installed and the second cooling air Fa, Fb are blown from the second outlets 427, 428 to each of front and rear sides are slightly positive in pressure.

Due to a pressure difference between the negative pressure zone (12) and the first and second positive pressure zones (31, 32) described above, and a rise in temperature of the cooling air through the heat exchange with the first and second battery module groups 31, 32, air circulation along an inner side face and an inner ceiling face of the upper case 10 and leading to the elevated portion 12 at the relatively highest position is promoted, and consequently, the heat exchange on the upper face 11 of the upper case 10 and the upper face 121 of the elevated portion 12 is promoted, whereby a cooling effect for the first and second battery module groups 31, 32 is achieved, and temperature distribution of the first and second battery module groups 31, 32 is homogenized.

Note that, although, in the above embodiment, the case in which the connection face 40a (lower face) of the proximal portion 40 is indirectly connected to the upper end portion 41a of the first branch duct portion 41 through contact via the elastic seal members 40s, 41s and the seating face 70a of the support plate 17 has been described, a configuration can also be employed in which the upper end portion 41a of the first branch duct portion 41 is directly connected through fitting into the communication portion 410 of the proximal portion 40 through the opening 70 on the support plate 17, with the elastic seal member being provided between a periphery thereof and the opening 70.

In addition, although Figure 9 has shown the embodiment in which the thick-walled portion 41e (protrusion portion, rib) is formed in a continuous manner to span both sides of the gap 312 of the lower end portion 41b of the first branch duct portion 41, the thick-walled portion 41e may also be provided in a separate manner on respective sides (outlet 417 side and outlet 418 side) of the gap 312, or in a separate manner on the respective side faces and the bottom face of the lower end portion 41b.

Furthermore, although the case in which the support plate 17 is provided in the elevated portion 12 formed in the rear portion in the vehicle longitudinal direction of the battery case 1 has been explained in the above embodiment, the present invention may also be carried out in a mode in which the elevated portion 12 is provided in the front portion or the intermediate portion in the vehicle longitudinal direction.

It should be added that, although the embodiment of the present invention has been described above, the present invention is not limited to the above embodiment, and various modifications and changes can be further made within the scope of the present invention.

### [Reference Signs List]

1 Battery pack
4 Blower duct
5 Blower fan
10 Upper case
11 Upper face
12 Elevated portion
17 Support plate
18 Leg portion
20 Lower case
26, 27, 28 Reinforcing frame
31, 31c, 31d Battery module (first battery module group)
32, 32a, 32b Battery module (second battery module group)
40 Proximal portion
40a Connection face
40b Introduction portion
40s, 41s Elastic sealing member
41 First branch duct portion (Duct portion)
41a Upper end portion
41b Lower end portion
41d Semi-funnel shape portion (Guiding portion)
41e Thick-walled portion
42 Second branch duct portion (Second duct portion)
50 Inlet
54 Discharge port
70 Opening
310, 312, 320, 322, 330 Gap
410 Communication portion
417, 418 First outlet
421, 422 Upper stream portion
424, 426 Lower stream portion
427, 428 Second outlet

## Claims

1. A cooling structure for a battery pack comprising a plurality of battery modules inside a substantially sealed battery case, wherein:
the plurality of battery modules are fixedly arranged inside the battery case with a gap between one another;
in an inside of the battery case, a support plate provided to extend on an upper side of the battery module separates a central portion except for a peripheral portion thereof from a side of the battery module;
a blower fan fixedly arranged on the support plate, and a blower duct for blowing air sent out from the blower fan to the middle of the battery modules in a vehicle longitudinal direction and a vehicle width direction are provided, the blower duct comprises a proximal portion connected to a discharge port of the blower fan and a duct portion extending from the proximal portion to a lower side, through the support plate, and, a lower end portion of the duct portion is inserted into the gap in the battery modules and held in a lower portion of a side face of the battery module; and
the cooling structure is configured such that the air blown to the gap in the battery modules through the duct portion passes through the peripheral portion of the support plate to be circulated to an inside of the elevated portion.

2. The cooling structure for a battery pack according to claim 1, wherein a protrusion portion or a thick-walled portion protruding from a side face of the duct portion is formed at the lower end portion of the duct portion, and the lower end portion of the duct portion is held through contact of the protrusion portion or the thick-walled portion with the lower portion of the side face of the battery module.

3. The cooling structure for a battery pack according to claim 2, wherein: the duct portion is constituted of a member different from the proximal portion; the proximal portion is connected to an upper face of a penetrating portion of the support plate via an elastic seal material; and an upper end portion of the duct portion is connected to a lower face of the penetrating portion of the support plate via an elastic seal material.

4. The cooling structure for a battery pack according to any one of claims 1 to 3, wherein the lower end portion of the duct portion: extends across a gap in an intersecting direction with the gap in the battery modules to both sides thereof; is inserted, on the respective sides, into the gap in the battery modules; and has outlets on the respective sides.

5. The cooling structure for a battery pack according to any one of claims 1 to 4, wherein in the duct portion, a guiding portion bulging into a gap in an intersecting direction with the gap in the battery modules to extend to a lower side is formed on a side face positioned on a front side in a discharging direction of the blower fan.

6. The cooling structure for a battery pack according to claim 5, wherein the lower end portion of the duct portion is positioned in an extension direction of the gap in the battery modules, due to the guiding portion being in contact with an end face of the battery module facing the gap in the intersecting direction in the battery module.

7. The cooling structure for a battery pack according to any one of claims 1 to 6, wherein: the plurality of battery modules comprise a first battery module group fixedly arranged in a rear portion in the vehicle longitudinal direction of the battery case with a gap between one another, and a second battery module group fixedly arranged further on a front side in the vehicle longitudinal direction than the first battery module group with a gap between one another; the support plate is provided to extend on an upper side of the first battery module group; the blower duct further comprises a second duct portion extending from the proximal portion to a front side; the duct portion is communicatively connected to a first outlet positioned in the middle of the first battery module group in the vehicle longitudinal direction and the vehicle width direction; and the second duct portion is communicatively connected to a second outlet positioned in the middle of the second battery module group in the vehicle longitudinal direction and the vehicle width direction.
